# EUROPEAN PATENT APPLICATION

(11) **EP 1 714 949 A1**
(43) Date of publication of application: **25.10.2006**
(21) Application number: 05008394.8
(22) Date of filing: 18.04.2005
(51) Int. Cl.: C04B 24/02, C04B 24/26, C04B 28/02, C04B 40/00

(54) **Concrete composition with reduced drying shrinkage**

(71) Applicant: GENERAL ADMIXTURES S.p.A., 31050 PONZANO V.TO (TV) (IT)
(72) Inventor: Collepardi, Mario, 31100 Treviso (IT)
(74) Representative: Banfi, Paolo

(57) **Abstract**

Concrete composition containing shrinkage-reducing admixtures and superplasticizers particularly useful for the preparation of shrinkage-compensating concretes in the absence of wet curing.

## Description

The present invention provides shrinkage-reducing admixtures and their use in combination with polycarboxylate-based superplasticizer, for the preparation of crack-free concretes, particularly of reinforced concrete structures.

### Background of the invention

In general, the durability of reinforced concrete structures is related to a low-porosity cement matrix enveloping both aggregates and metallic reinforcements, so that the environmental aggressive agents cannot penetrate the concrete. This situation can be achieved where the water-cement ratio of the concrete mixture is relatively low (0.55-0.45) and a proper wet curing is adopted. In the absence of a wet curing, air-cured concrete in environments with relative humidity (R.H.) lower than 95% is exposed to drying shrinkage. Restrained shrinkage causes tensile stress and, when this becomes higher than the tensile strength, cracking occurs. Cracked concrete structures can be penetrated by aggressive agents such as chloride or sulphate ions even in low-porosity systems because these ions can diffuse through the cracks in spite of the low-porosity cement matrix.

The reduction in the drying shrinkage can be carried out in two different ways:
- by reducing the water-cement ratio and increasing the aggregate-cement ratio (A.M. Neville, "Properties of Concrete", 4th Edition, pp 29-435, Longman Group, 1995);
- by using shrinkage reducing admixtures (SRA) based on glycol ether which can be chemically represented as (CnH₂ₙ)-(OH)₂ (N.S. Berke, et al., Proceedings of the Fifth Canmet/ACI Int. Conference on Superplasticizers and Other Chemical Admixtures, pp 973-1000, 1997).
   For instance the use of propylene glycol CH₃-CH₂-CH₂-CHOH-CH₂OH has been disclosed by Shi, Caijun et al. in US Patent Application 10022011082. US patent No. 3,663,251 discloses concretes containing additives based on polyalkylene glycols of formula HOAO[AO]ₓOR where R is hydrogen, a hydrocarbon radical or -OC-R', where R' is a hydrocarbon radical, A is -CH₂CH₂-, CH₂CH₂CHB₂ or -CH₂CH(CH₃)- and x is an integer. US Patent No. 4,547,223 proposes the use of RO(AO)ₙH in which R represents C₁₋₇alkyl or C₅₋₆cycloalkyl radical, A represents one or more C₂₋₃alkylene radicals; and n is 1-10. US Patent No. 5,498,665 suggests the use of polypropylene glycol as a shrinkage-reducing admixture in dispersion powder composition for construction materials. US Patent No. 6,251,180 proposes the use of a SRA comprising at least one cyclic acetol of a tri- or poly-hydric alcohol. The European Patent EP 0 573 036 B1 proposes the use of polypropylene glycol as additive for reducing the amount of shrinkage in dispersion powder compositions for building materials. The German Patent DE 3732114 A1 proposes the use of a glycol such as CnH₂n(OH)₂, wherein n is not higher than 10 and not smaller than 5, as shrinkage reducing admixture.

### Description of the invention

It has been found that crack-free concretes can be prepared even in the absence of wet curing, by drying a concrete composition containing a combination of a polycarboxylate-based superplasticizer and a 2-(2-alkoxyethoxy)ethanol of formula (I)

R-O-CH₂-CH₂-O-CH₂-CH₂-OH (I)

wherein R is a linear or branched C₁-C₄ alkyl.

In particular, it was observed that when a 2-(2-alkoxy-ethoxy)ethanol compound of formula (I) is used in combination with a polycarboxylate-based superplasticizer, drying shrinkage is reduced by nearly 50% at early ages and by nearly 30% at longer ages. As confirmed by the experimental results, the combinations of a compound (I) with a polycarboxylate-based superplasticizer synergistically cooperate in reducing the drying shrinkage of concretes exposed to desiccation. Moreover said combinations proved able to increase the restrained expansion in reinforced structures containing expansive agents for shrinkage-compensating concretes.

Accordingly, the invention is directed to a concrete composition containing cement, aggregates, water, a polycarboxylate-based superplasticizer and a compound of formula (I)

R-O-CH₂-CH₂-O-CH₂CH₂-OH (I)

wherein R is a linear or branched C₁-C₄-alkyl.

Preferred compounds of formula (I) are: methoxy-ethoxy-ethanol, ethoxy-ethoxy-ethanol, propoxy-ethoxy-ethanol, isopropoxy-ethoxy-ethanol, butoxy-ethoxy-ethanol, 2-(2- isobutoxy-ethoxy) ethanol. The compounds of formula (I) can be used in amounts ranging from 0.1 to 10 Kg per m³ of concrete, preferably from 2 to 6 Kg/m³.

Preferred polycarboxylate-based superplasticizer (PC) are those of formula (II): 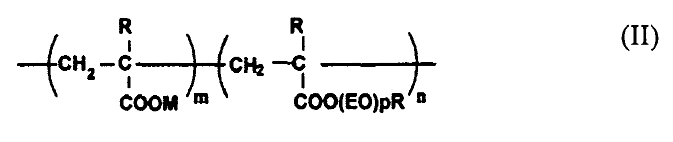 wherein:
R is H or a C₁-C₃-alkyl group, EO is ethoxy, M is an alkali or alkali-earth metal, preferably sodium; m, p and n are integers from 5 to 150. Example of commercial products corresponding to aqueous solutions of (II) are Primium RM 10™, Primium RM 20™ or premium RM 30™ (GA General Admixtures).

The amounts of superplasticizer and of the 2-(2-alkoxy-ethoxy)ethanol compound may range from 0.1 to 8 and from 0.1 to 10 Kg per m³ of concrete, preferably from 1 to 5 and from 2 to 6 Kg per m³ of concrete, respectively.

The concrete composition according to the invention may further contain one or more of the following supplementary cementitious materials in form of fine powders: ground blast furnace slag, fly ashes, silica fume, ground limestone, ground natural or industrial pozzolans, calcined schist. Preferably Portland cement is used, and the aggregates are natural or crushed aggregates in form of normal or light weight rocks or recycled aggregate from demolished concrete structures.

In a preferred embodiment, the concrete composition contains an expansive agent, such as calcium oxide. The ternary combinations of compounds (I), PC-based superplasticizers and calcium-oxyde-based expansive agents resulted surprisingly effective in the manufacture of shrinkage-compensating concretes in the absence of any wet curing, and therefore are particularly preferred.

In a further aspect, the invention is directed to a method for the manufacture of shrinkage-compensating concretes which comprises drying a concrete composition as herein disclosed in the presence of less than 95% relative humidity. Preferably, the shrinkage-compensating concretes are sealed and cured in the air in the absence of any wet curing. To obtain better results, however, it is preferable at early ages to protect the surface of the concrete structures from desiccation by using moulds or any other protective membranes.

According to the invention, the concrete compositions can be designed with a low water-cement ratio related to the class of exposure (level of the environmental aggression); after drying, the concretes are extremely impermeable and durable and do not present cracks, thus preventing penetration of aggressive agents into the cement matrix.

The following examples further illustrate the invention.

### Example 1

The drying shrinkage of prismatic specimens (100x100x500mm) manufactured with the following concrete mixtures were measured at 90 days in a room at 20°C with R.H. of 50%:
A) -control concrete with portland cement (340 kg/m³), water (205 kg/m³), aggregate (1810 kg/m³): drying shrinkage = 620 microstrains;
B) -concrete as in mix A with 2-(2-propoxy-ethoxy) ethanol (5 kg/m³): drying shrinkage = 450 microstrains;
C) -superplasticized control concrete (PC, in form of Primium Rm 20™, = 1% by weight of cement) with reduced cement (272 kg/m³) and mixing water (164 kg/m³) and more aggregate (1960 kg/m³): drying shrinkage = 310 microstrains;
D) -concrete as in mix C with 2-(2-propoxy-ethoxy) ethanol (5 kg/m³): drying shrinkage = 150 microstrains.

The results show that 2-(2-propoxy-ethoxy) ethanol reduces the concrete drying shrinkage by about 27% (from 620 to 450 microstrains). The drying shrinkage reduction is more effective when 2-(2-propoxy-ethoxy) ethanol is used in the presence of the PC-based superplasticizer: from 310 to 150 microstrains with a reduction of about 52%.

### Example 2

The drying shrinkage of prismatic specimens (100x100x500mm) manufactured with the following concrete mixtures were measured at 90 days in a room at 20°C with R.H. of 50%:
A) -control concrete with pozzolanic cement (340 kg/m³), water (205 kg/m³), aggregate (1810 kg/m³): drying shrinkage = 630 microstrains;
B) -concrete as in mix A with 2-(2-ethoxy-ethoxy) ethanol (5 kg/m3): drying shrinkage = 475 microstrains;
C) -superplasticized control concrete (PC, in form of Primium RM 10™, = 1% by weight of cement) with reduced cement (272 kg/m³) and mixing water (164 kg/m³) and more aggregate (1960 kg/m³): drying shrinkage = 310 microstrains;
D) -concrete as in mix C with 2-(2-ethoxy-ethoxy) ethanol (5 kg/m³) drying shrinkage = 160 microstrains.

The results show that 2-(2-ethoxy-ethoxy) ethanol reduces the concrete drying shrinkage by about 25% (from 630 to 475 microstrains). The drying shrinkage reduction is more effective when 2-(2-ethoxy-ethoxy) ethanol is used in the presence of the PC-based superplasticizer: from 310 to 160 microstrains with a reduction of about 48%.

### Example 3

The drying shrinkage of prismatic specimens (100x100x500mm) manufactured with the following concrete mixtures were measured at 90 days in a room at 20°C with R.H. of 50%:
A) -control concrete with slag cement (340 kg/m³), water (205 kg/m³), aggregate (1810 kg/m³): drying shrinkage = 640 microstrains;
B) -concrete as in mix A with 2-(2-methoxy-ethoxy) ethanol (5 kg/m³): drying shrinkage = 425 microstrains;
C) -superplasticized control concrete (PC, in form of Primium RM 30™,= 0.5% by weight of cement) with reduced cement (272 kg/m³) and mixing water (164 kg/m³) and more aggregate (1960 kg/m³): drying shrinkage = 330 microstrains;
D) -concrete as in mix C with 2-(2-methoxy-ethoxy) ethanol (5 kg/m³) drying shrinkage = 160 microstrains.

The results show that 2-(2-methoxy-ethoxy) ethanol reduces the concrete drying shrinkage by about 34% (from 640 to 425 microstrains). The drying shrinkage reduction is more effective when 2-(2-methoxy-ethoxy) ethanol is used in the presence of the PC-based superplasticizer: from 330 to 190 microstrains with a reduction of about 42%.

### Example 4

The drying shrinkage of prismatic specimens (100x100x500mm) manufactured with the following concrete mixtures were measured at 90 days in a room at 20°C with R.H. of 50%:
A) -control concrete with portland cement (310 kg/m³), silica fume (30 kg/m³, water (205 kg/m³), aggregate (1810 kg/m³): drying shrinkage = 650 microstrains;
B) -concrete as in mix A with 2-(2-butoxy-ethoxy) ethanol (5 kg/m³): drying shrinkage = 425 microstrains;
C) -superplasticized control concrete (PC, in form of Primium RM 10™ = 2% by weight of cement) with reduced cement (272 kg/m³) and mixing water (164 kg/m³) and more aggregate (1960 kg/m³): drying shrinkage = 360 microstrains;
D) -concrete as in mix C with 2-(2-butoxy-ethoxy) ethanol (5 kg/m³): drying shrinkage = 160 microstrains.

The results show that 2-(2-butoxy-ethoxy) ethanol reduces the concrete drying shrinkage by about 35% (from 650 to 425 microstrains). The drying shrinkage reduction is more effective when 2-(2-butoxy-ethoxy) ethanol is used in the presence of the PC-based superplasticizer: from 360 to 190 microstrains with a reduction of about 47%.

### Example 5

The drying shrinkage of prismatic specimens (100x100x500mm) manufactured with the following concrete mixtures were measured at 90 days in a room at 20°C with R.H. of 50%:
A) -control concrete with portland cement (340 kg/m³), water (205 kg/m³), aggregate (1810 kg/m³): drying shrinkage = 620 microstrains;
B) -concrete as in mix A with a blend of 2-(2-isobutoxy-ethoxy) ethanol (2.5 kg/m³) and 2-(2-isopropoxy-ethoxy) ethanol: drying shrinkage = 500 microstrains;
C) -superplasticized control concrete (PC, in form of Primium RM 10™ = 1.5% by weight of cement) with reduced cement (272 kg/m3) and mixing water (164 kg/m³) and more aggregate (1960 kg/m³): drying shrinkage = 310 microstrains;
D) -concrete as in mix C with a blend 2-(2-isobutoxy-ethoxy) ethanol (2.5 kg/m³) and 2-(2-isopropoxy-ethoxy) ethanol: drying shrinkage = 195 microstrains.

This example shows that a blend of 2-(2-isobutoxy-ethoxy) ethanol and 2-(2-isopropoxy-ethoxy) ethanol is able to reduce by itself the concrete drying shrinkage by about 19% (from 620 to 500 microstrains). Moreover, the drying shrinkage reduction is more effective when the blend of 2-(2-isobutoxy-ethoxy) ethanol and 2-(2-isopropoxy-ethoxy) ethanol is used in the presence of the PC-based superplasticizer: from 310 to 195 microstrains with a reduction of about 37%.

### Example 6

The restrained expansion of reinforced concretes specimens (76x76x254 mm) was measured after 7 days of wet curing according to the method ASTM C878; then, at 90 days the length change was determined on the same specimens demoulded at 7 days and kept in the air at R.H. of 50%.
A) control concrete with portland cement (300 kg/m³), CaO-based expansive agent (30 kg/m³), water (150 kg/m³), aggregate (1940 kg/m³); expansion at 7 days = 1020 microstrains; drying shrinkage at 90 days with respect to 7 days = 1200 microstrains; net length change at 90 days = 1020-1200= -180 microstrains of residual shrinkage;
B) concrete as in A mix with 2-(2-isopropoxy-ethoxy) ethanol (3 kg/m³): expansion at 7 days =1150 microstrains; drying shrinkage at 90 days with respect to 7 days = 500 microstrains; net length change at 90 days = 1150-500 = 650 microstrains of residual expansion;
C) superplasticized control concrete (PC, in form of Primium 20™ = 1% by weight of cement) with CaO-based expansive agent (30 kg/m³), with reduced cement (260 kg/m³) and water (130 kg/m³) and more aggregate (2010 kg/m³); expansion at 7 days = 850 microstrains; drying shrinkage at 90 days with respect to 7 days = 1000 microstrains; net length change at 90 days = 850-1000= -150 microstrains of residual shrinkage;
D) concrete as in mix C with 2-(2-isopropoxy-ethoxy) ethanol (3 kg/m³): expansion at 7 days 1200 microstrains; drying shrinkage at 90 days with respect at 7 days = 450 microstrains; net length change at 90 days = 1200-450 = 750 microstrains of residual expansion;

These results indicate that 2-(2-isopropoxy-ethoxy) ethanol is capable of both increasing the restrained expansion of the 7-day wet cured specimen and reduce the drying shrinkage of the same specimen when exposed to air with a R.H. of 50%.

### Example 7

The restrained expansion of reinforced concretes specimens (76x76x254 mm) was measured after 7 days of wet curing according to the method ASTM C878; then, at 90 days the length change was determined on the same specimens demoulded at 7 days and kept in the air at R.H. of 50%.
A) control concrete with portland cement (300 kg/m³), CaO-based expansive agent (30 kg/m³), water (150 kg/m³), aggregate (1940 kg/m³); expansion at 7 days = 1020 microstrains; drying shrinkage at 90 days with respect to 7 days = -1200 microstrains; net length change at 90 days = 1020-1200 = -180 microstrains of residual shrinkage;
B) concrete as in A mix with 2-(2-isopropoxy-ethoxy) ethanol (3 kg/m³): expansion at 7 days =1150 microstrains; drying shrinkage at 90 days with respect to 7 days = -500 microstrains; net length change at 90 days = 1150-500 = 650 microstrains of residual expansion;
C) superplasticized control concrete (PC, in form of Primium Rm 10™ = 2% by weight of cement) with CaO-based expansive agent (30 kg/m³), with reduced cement (260 kg/m³) and water (130 kg/m³) and more aggregate (2010 kg/m3); expansion at 7 days = 850 microstrains; drying shrinkage at 90 days with respect to 7 days = -1000 microstrains; net length change at 90 days = 850 -1000 = -150 microstrains of residual shrinkage;
D) concrete as in mix C with 2-(2-isopropoxy-ethoxy) ethanol (3 kg/m³): expansion at 7 days 1200 microstrains; drying shrinkage at 90 days with respect at 7 days = -450 microstrains; net length change at 90 days = 1200 -450 = 750 microstrains of residual expansion;

These results indicate that 2-(2-isopropoxy-ethoxy) ethanol is capable of both increasing the restrained expansion of the 7-day wet cured specimen and reduce the drying shrinkage of the same specimen when exposed to air with a R.H. of 50%.

### Example 8

The restrained expansion of reinforced concretes specimens (76x76x254 mm) was measured after 2 days according to the method ASTM C878 except for the wet curing which was replaced by sealing the specimens with a clinging plastic sheet; then, at 90 days the length change was determined on the same specimens kept in the air at R.H. of 50% after removing the clinging plastic sheet at 2 days.
A) control concrete with portland cement (300 kg/m³), CaO-based expansive agent (30 kg/m³), water (150 kg/m³), aggregate (1940 kg/m³); expansion at 2 days = 100 microstrains; drying shrinkage at 90 days with respect to 2 days = -1350 microstrains; net length change at 90 days = 100-1350 = -1250 microstrains of residual shrinkage;
B) concrete as in A mix with 2-(2-isopropoxy-ethoxy) ethanol (3 kg/m³): expansion at 2 days = 650 microstrains; drying shrinkage at 90 days with respect to 2 days = -250 microstrains; net length change at 90 days = 650-250 = 400 microstrains of residual expansion;
C) superplasticized control concrete (PC, in form of Primium RM 30™ = 1% by weight of cement) with CaO-based expansive agent (30 kg/m³), with reduced cement (260 kg/m³) and water (130 kg/m³) and more aggregate (2010 kg/m³); expansion at 2 days = 150 microstrains; drying shrinkage at 90 days with respect to 2 days = -900 microstrains; net length change at 90 days = 150-900 = -750 microstrains of residual shrinkage;
D) concrete as in mix C with 2-(2-isopropoxy-ethoxy) ethanol (3 kg/m³): expansion at 7 days 600 microstrains; drying shrinkage at 90 days with respect at 2 days = -150 microstrains; net length change at 90 days = 600-150 = 450 microstrains of residual expansion;

These results indicate that 2-(2-isopropoxy-ethoxy) ethanol is capable of both increasing the restrained expansion of the 2-day curing of the sealed specimens and reduce the drying shrinkage of the same specimen when exposed to air with a R.H. of 50%.

### Example 9

The restrained expansion of reinforced concretes specimens (76x76x254 mm) was measured after 2 days according to the method ASTM C878 except for the wet curing which was replaced by sealing the specimens with a clinging plastic sheet; then, at 90 days the length change was determined on the same specimens kept in the air at R.H. of 50% after removing the clinging plastic sheet at 2 days.
A) control concrete with portland cement (300 kg/m³), CaO-based expansive agent (30 kg/m³), water (150 kg/m³), aggregate (1940 kg/m³); expansion at 2 days = 100 microstrains; drying shrinkage at 90 days with respect to 2 days = -1350 microstrains; net length change at 90 days = 100-1350 = -1250 microstrains of residual shrinkage;
B) concrete as in A mix with 2-(2-butoxy-ethoxy) ethanol (6 kg/m³): expansion at 2 days = 900 microstrains; drying shrinkage at 90 days with respect to 2 days = -150 microstrains; net length change at 90 days = 900- 150 = 650 microstrains of residual expansion;
C) superplasticized control concrete (PC, in form of Primium RM 20™ = 0.75% by weight of cement) with CaO-based expansive agent (30 kg/m³), with reduced cement (260 kg/m³) and water (130 kg/m³) and more aggregate (2010 kg/m³); expansion at 2 days = 150 microstrains; drying shrinkage at 90 days with respect to 2 days = -900 microstrains; net length change at 90 days = 150-900 = -750 microstrains of residual shrinkage;
D) concrete as in mix C with 2-(2-butoxy-ethoxy) ethanol (6 kg/m³): expansion at 7 days 800 microstrains; drying shrinkage at 90 days with respect at 2 days = -150 microstrains; net length change at 90 days = 800-150 = 650 microstrains of residual expansion;

These results indicate that 2-(2-butoxy-ethoxy) ethanol is capable of both increasing the restrained expansion of the 2-day curing of the sealed specimens and reduce the drying shrinkage of the same specimen when exposed to air with a R.H. of 50%.

### Example 10

The restrained expansion of reinforced concretes specimens (76x76x254 mm) was measured after 1 day according to the method ASTM C878 except for the wet curing which was replaced by air curing at a R.H. of 50%; then, at 90 days the length change was determined again on the same specimens kept in the air at R.H. of 50%.
A) control concrete with portland cement (300 kg/m³), CaO-based expansive agent (30 kg/m³), water (150 kg/m³), aggregate (1940 kg/m³); shrinkage at 1 day = -200 microstrains; drying shrinkage at 90 days with respect to 2 days = -1250 microstrains; net length change at 90 days = -200 -1250 = -1450 microstrains of residual shrinkage;
B) concrete as in A mix with 2-(2-butoxy-ethoxy) ethanol (6 kg/m³): expansion at 1 days = 350 microstrains; drying shrinkage at 90 days with respect to 1 days = -250 microstrains; net length change at 90 days = 350-250 = 100 microstrains of residual expansion;
C) superplasticized control concrete (PC, in form of Primium RM 30™ = 1% by weight of cement) with CaO-based expansive agent (30 kg/m³), with reduced cement (260 kg/m³) and water (130 kg/m³) and more aggregate (2010 kg/m³);shrinkage at 1 day = -150 microstrains; drying shrinkage at 90 days with respect to 1 day = -950 microstrains; net length change at 90 days =-150 - 950 = -1100 microstrains of residual shrinkage;
D) concrete as in mix C with 2-(2-butoxy-ethoxy) ethanol (6 kg/m³): expansion at 7 days 380 microstrains; drying shrinkage at 90 days with respect at 1 day = -150 microstrains; net length change at 90 days = 380-150 = 230 microstrains of residual expansion;

These results indicate that 2-(2-butoxy-ethoxy) ethanol is capable of both increasing the restrained expansion of the 1-day air curing and reduce the drying shrinkage of the same specimen at later ages.

## Claims

1. A concrete composition containing cement, aggregates, water, a polycarboxylate-based superplasticizer and a compound of formula (I)
R-O-CH₂-CH₂-O-CH₂-CH₂-OH (I)
wherein R is a linear or branched C₁-C₄-alkyl.

2. A concrete composition according to claim 1, wherein the compound of formula (I) is selected from the group consisting of methoxy-ethoxy-ethanol, ethoxy-ethoxy-ethanol, propoxy-ethoxy-ethanol, isopropoxy-ethoxy-ethanol, butoxy-ethoxy-ethanol, 2-(2- isobutoxy-ethoxy) ethanol.

3. A concrete composition according to claim 1, wherein the polycarboxylate-based superplasticizer is a compound of formula (II): 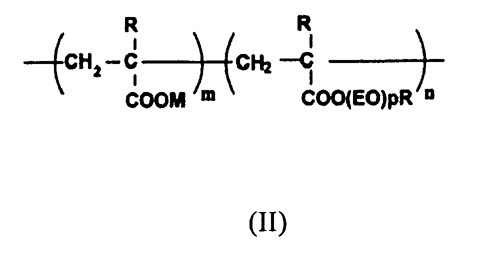 wherein:
R is H or a C₁-C₃-alkyl group, EO is ethoxy, M is an alkali or alkali-earth metal; m, p and n are integers from 5 to 150.

4. A concrete mixture according to claim 1, further containing one or more of the following supplementary cementitious materials in form of fine powders: ground blast furnace slag, fly ashes, silica fume, ground limestone, ground natural or industrial pozzolans, calcined schist.

5. A concrete mixture according to claim 1, wherein the cement is a Portland cement.

6. A concrete mixture according to claim 1, containing natural or crushed aggregates in form of normal or light weight rocks or recycled aggregate from demolished concrete structures.

7. A concrete mixture according to claim 1, further containing an expansive agent.

8. A concrete mixture according to claim 7, wherein the expansive agent is calcium oxide.

9. A concrete mixture according to claim 1, containing an amount of compound (I) ranging from 0.1 to 10 Kg per m³ of concrete.

10. A concrete mixture according to claim 9, wherein said amount ranges from 2 to 6 Kg/m³

11. The use of a compound formula (I)
R-O-CH₂-CH₂-O-CH₂-CH₂-OH (I)
in combination with a polycarboxylate-based superplasticizer, for the preparation of a concrete.

12. The use according to claim 11, wherein the polycarboxylate-based superplasticizer is a compound of formula (II) 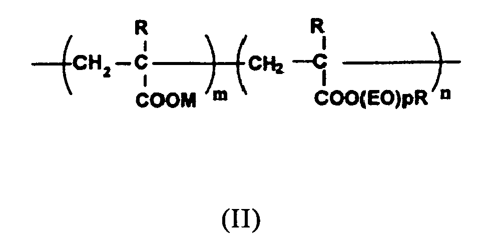 wherein:
R is H or a C₁-C₃-alkyl group, EO is ethoxy, M is an alkali or alkali-earth metal; m, p and n are integers from 5 to 150.

13. The use according to claim 11, for the preparation of a reinforced concrete.

14. A method for the manufacture of shrinkage-compensating concretes which comprises drying a concrete mixture according to claims 1-10 in the presence of less than 95% relative humidity.

15. A method according to claim 14, wherein the shrinkage-compensating concretes are sealed and cured in the air in the absence of any wet curing.
